Europäisches Patentamt

European Patent Office

Office européen des brevets

(19)

(11) EP 1 066 996 B1

(12) **EUROPEAN PATENT SPECIFICATION**

(45) Date of publication and mention
of the grant of the patent:
**11.05.2005 Bulletin 2005/19**

(51) Int Cl.7: **B60H 1/00**

(21) Application number: **00114210.8**

(22) Date of filing: **03.07.2000**

(54) **A control system for an air conditioning installation for the passenger compartment of a motor vehicle, in particular for the cab of an industrial vehicle**

Steueranlage für eine Klimaanlage für den Fahrgastraum eines Kraftfahrzeugs, insbesondere von einem Fahrerhaus eines Nutzfahrzeuges

Système de commande pour une installation de climatisation de l'habitacle d'un véhicule automobile à moteur, notamment pour une cabine du conducteur d'un véhicule industriel

(84) Designated Contracting States:
**AT BE CH CY DE DK ES FI FR GB GR IE IT LI LU MC NL PT SE**

(30) Priority: **06.07.1999 IT TO990583**

(43) Date of publication of application:
**10.01.2001 Bulletin 2001/02**

(73) Proprietor: **IVECO S.p.A.**
**10156 Torino (IT)**

(72) Inventors:
• **Martini, Stefania**
**10137 Torino (IT)**
• **Mola, Stefano**
**10045 Piossasco (IT)**

• **Pippione, Eugenio**
**10141 Torino (IT)**

(74) Representative: **Gervasi, Gemma, Dr. et al**
**NOTARBARTOLO & GERVASI**
**Corso di Porta Vittoria, 9**
**20122 Milano (IT)**

(56) References cited:
**EP-A- 0 491 261       US-A- 4 941 525**
**US-A- 5 209 079**

• **PATENT ABSTRACTS OF JAPAN vol. 014, no. 347 (M-1002), 26 July 1990 (1990-07-26) & JP 02 120117 A (HONDA MOTOR CO LTD), 8 May 1990 (1990-05-08)**

**Description**

The present invention relates to a control system for an air conditioning installation for the passenger compartment of a motor vehicle, in particular for the cab of an industrial vehicle.

In the system according to the invention of the main quantity on which the control of the air conditioning is based is not the temperature detected in the vehicle's passenger compartment but rather an artificial quantity, hereinafter defined as "equivalent temperature" which, according to the predetermined function, takes account of the temperature in the passenger compartment as well as other temperatures and quantities that characterise the air conditioning installation in order better to represent the sensation of heat experienced by the passenger for the purpose of guaranteeing the achievement of a better climatic comfort.

As will appear more clearly hereinafter the equivalent temperature is a quantity which takes account of the exchanges of heat between the man and the surrounding environment: it depends on the balance between the convective thermal load and the radiative thermal load, that is the temperature of the air within the passenger compartment, the temperature and speed of conditioned air which is delivered from the ventilation outlets, as well as the solar radiation through the vehicle windows.

Using a control based on the equivalent temperature makes it possible to take into account all the above-mentioned factors, and this is particularly important in an environment in which the climate can be strongly inhomogenous as, for example, in the cab of an industrial vehicle in which, with respect to what happens in a house, the walls are very close to the occupant and the air streams have a very high speed and a greater possibility of coming into contact with the occupant.

It is an object of the present invention to provide an improved control system for an air conditioning installation usable in particular for climate control in the cab of an industrial vehicle.

This and other objects are achieved according to the invention with a control system for an air conditioning installation the salient characteristics of which are defined in the annexed Claim 1.

Further characteristics and advantages of the invention will become apparent from the following detailed description given purely by way of non-limitative example, with reference to the attached drawings, in which:

> Figure 1 is a partial sectional view of a schematic representation of the front part of the cab of an industrial vehicle with an associated air conditioning installation; and
>
> Figure 2 is a block diagram of the control system for an air conditioning installation according to the invention.

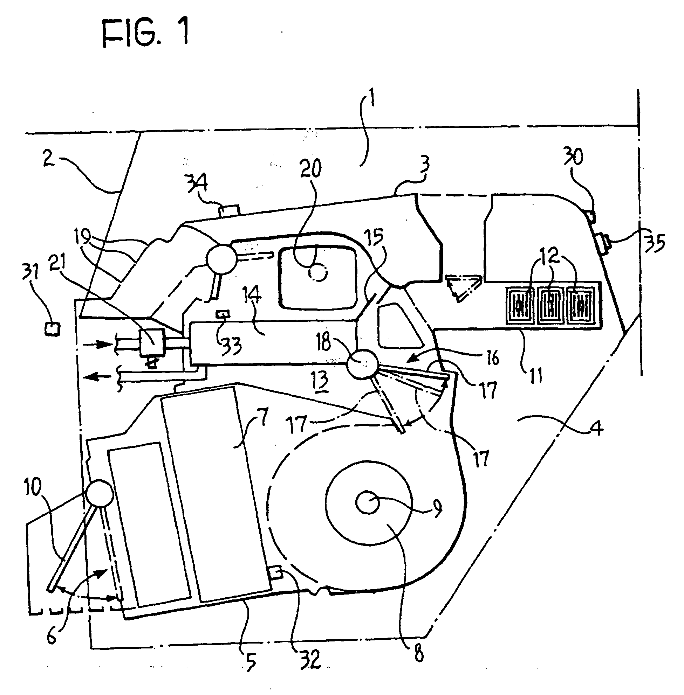

In Figure 1 the reference numeral 1 generally indicates the front part of the cab of an industrial vehicle, delimited at the front by a windscreen 2 below which is a dashboard 3 under which, in a known arrangement, is located an air conditioning unit generally indicated 4.

The air conditioning unit 4 has an inlet duct 5 with an inlet opening 6 through which, in operation, air to be treated is drawn. Downstream from the opening 6, in the inlet duct 5, is disposed the evaporator 7 of a refrigerating unit known per se.

Downstream of this evaporator is mounted a fan 8 driven by an electric motor 9.

The fan 8 draws air along the inlet duct 5 from the opening 6 and through the evaporator 7. The air drawn in through the opening 6 can be outside air or air coming from within the passenger compartment depending on the position of an inlet flap value 10. In its passage through the evaporator 7 the incoming air is cooled. To the outlet side of the duct 5 are coupled (at least) one emission duct 11 communicating with a plurality of ventilation outlets 12 located in the passenger compartment 1, in particular in the so-called belt region. To the outlet end of the duct 5 there is further coupled a chamber 13 in which is located an air heater device 14.

The chamber 13 can communicate with the emission duct 11 through a partition 15 having leakage apertures.

A mixer device indicated 16 is disposed between the outlet of the duct 5 and the inlets to the chamber 13 of the heater 14 and to the emission duct 11 respectively. In the exemplary embodiment illustrated the mixer device 16 comprises a rotatable flap value 17 the angular position of which is controlled by means of an electrically driven actuator 18 of type known per se.

The flap value 17 of the mixer device is in particular adapted to assume a first position, illustrated in broken outline in Figure 1, and a second position, illustrated in solid outline in this Figure, in which it allows the outlet from the fan 8 to be selectively coupled with the emission duct 11 and the outlets 12, or with the chamber 13 respectively. Between these end positions the flap value 17 of the mixer device can assume either continuously or incrementally, a plurality of intermediate positions in which it couples the output from the fan 8 both with the emission duct 11 and outlet 12, and with the heater chamber 13, but with respective variable flow rates.

When the flap valve 17 allows the passage of treated air from the fan 8 into the heater chamber 13 the air which flows through the heater 14 can be divided essentially into three streams: the first stream, the said defrosting stream, is delivered to the inner surfaces of the windscreen 2 through apertures 19 in the dashboard, a second stream can be directed through a duct 20 towards the lower part of the passenger compartment where the driver's and any possible passenger's feet are located, and a remaining stream can flow into the emission duct 11 towards the outlets 12 via the partition 15.

Therefore not only air cooled upon passage through the evaporator 7 can arrive at the ventilator outlets 12 but also a fraction of air treated by the heater 14.

In a manner known per se the heater 14 is conveniently constituted by a liquid/air heat exchanger which can receive a stream of coolant liquid from the internal combustion engine (not illustrated) of the vehicle through an electrically controlled valve 21.

The performance of the heater in terms of the increase in the temperature of the air which flows through it, obviously depends on the rate of flow of this air, which in turn depends on the position of the flap valve 17 of the mixer device 16 and the rate of flow of coolant liquid which flows through it via the electrically controlled valve 21. This water flow rate depends on the average opening time of the valve 21, that is the duty cycle of opening thereof if, as normally occurs, this electrically controlled valve is piloted by a square wave signal of variable duty cycle.

The control of the air conditioning in the passenger compartment 1 can therefore in general be achieved by acting on the fan 8, 9 to vary the rate of flow of cooled air introduced into the unit 4, on the actuator 18 to vary the division of cooled air between the heater 14 and the duct 11 which leads to the outlet 12, and on the duty cycle of the electrically controlled valve 21 to vary the rate of flow of water supplied to the heater 14.

Control is achieved, as will be described in more detail below, on the basis of several parameters detected by means of sensors as will now be described in detail.

A plurality of temperature sensors is associated with the air conditioning unit. A first temperature sensor 30 provides electrical signals indicative of the air temperature $T_I$ of the passenger compartment 1. A temperature sensor 31 on the other hand provides a signal indicative of the air temperature $T_e$ outside the passenger compartment.

A third temperature sensor 32 detects and signals the temperature $T_{EVA}$ of the output air from the evaporator 7. A further temperature sensor 33 detects and signals the temperature $T_{AS}$ of the air at the output of the heater 14.

A sensor adapted to detect the heat power density (in W/mq) which penetrates into the passenger compartment 1 by the effect of solar radiation is indicated 34.

A setting device of type known per se is indicated 35, and is manually operable by the user to set the desired temperature $T_d$ in the passenger compartment 1.

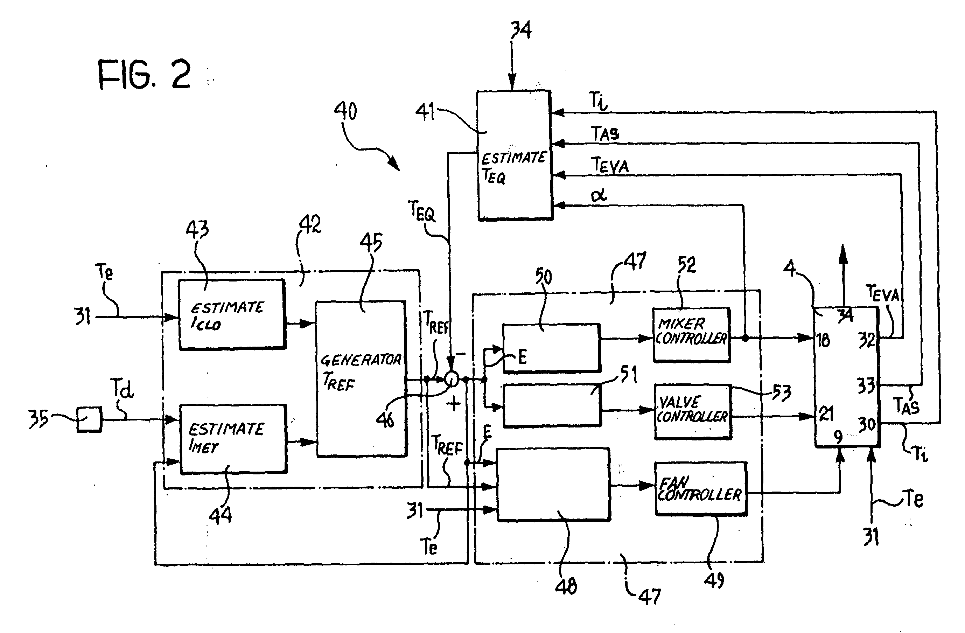

In Figure 2 the control system associated with the air conditioning unit 4 described above is illustrated in block diagram form. In Figure 2 the whole air conditioning unit 4 has been schematically shown in the form of a block with inputs and outputs indicated by the same reference numerals as are used in the preceding description and in Figure 1 in relation to controlled devices and sensors forming part of this unit.

The control system associated with the air conditioning unit 4, generally indicated 40 in Figure 2, comprises a first processor unit 41 set up to calculate the instantaneous value of the equivalent temperature $T_{EQ}$ mentioned in the introduction to the present description, according to a pre-established estimate of the temperature $T_i$ of the air in the passenger compartment 1, the temperatures $T_{AS}$ and $T_{EVA}$ of the air at the output of the heater 14 and at the output of the evaporator 7 respectively, as well as the percentage opening $\alpha$ of the flap valve 17 of the mixer device 16 and the thermal power I introduced into the passenger compartment 1 by the effect of solar radiation.

The percentage opening $\alpha$ of the flap valve 17 of the mixer device 16 is variable between 0 and 100%, the first value being assumed when this flap valve decouples the chamber 13 of the heater 14 from the fans 8-9 (position illustrated in broken outline in Figure 1) and, respectively, when this flap valve decouples the emission duct 11 from the fan 8-9 (position illustrated in solid outline in Figure 1).

The processor unit 41 is in particular set to estimate the equivalent temperature $T_{EQ}$ on the basis of the following estimation equation:

$$T_{EQ} = k_1 - T_i + k_2 (1-\alpha) \cdot T_{EVA} + k_3 \cdot \alpha \cdot T_{AS} + k_4 \cdot I \qquad (1)$$

in which $T_i$, $T_{EVA}$, $T_{AS}$ and $\alpha$ have the above-described signification, I (W/mq) is the contribution of radiation due to the solar radiation measured by the sensor 34 and $K_1$, $K_2$, $K_3$ and $K_4$ are coefficients determined experimentally and with the use of matching algorithms on the basis of the temperature detected with a dummy of known type provided with sensors and positioned in the passenger compartment.

The control system 40 includes a further unit, generally indicated 42 in Figure 2, set to calculate an instantaneous objective value $T_{REF}$ for the equivalent temperature according to a predetermined function of the temperature $T_E$ of the external air outside the passenger compartment and the desired temperature $T_d$ set by the user by use of the device 35.

The unit 42 in the embodiment illustrated in Figure 2 includes an estimation block 43 for estimating a first index $I_{CLO}$ which is ideally indicative of what the user is wearing. This index is fictitiously estimated on the basis of the temperature $T_e$ of the air outside the passenger compartment 1 measured by the sensor 31, for example according to the functions defined as:

$I_{CLO}$ = 1, 2, for $T_e$ < -10°C
$I_{CLO}$ = 1, for $T_e$ lying between -10°C and +30°C, and
$I_{CLO}$ = 0.8 for $T_e$ > 30°C

A further block 44 of the unit 42 is arranged to estimate a second index $I_{MET}$ indicative of the physical or "metabolic" state of the user. This index is for example variable between 1.5 and 0.5 upon variation of the desired temperature $T_d$ set by the user between its minimum and maximum envisaged values.

The estimated values of the indices $I_{CLO}$ and $I_{MET}$ are provided to the input of a block 45 which acts to determine an instantaneous objective value $T_{REF}$ for the equivalent temperature $T_{EQ}$ according to a predetermined function of the said indices, for example according to the following relation:

$$T_{REF} = (-a_1 \cdot I_{CLO} + a_2) + (1 - I_{MET}) \cdot b \qquad (2)$$

where $a_1$, $a_2$ and b are predetermined constants. Experimentation has led to a determination that the optimum values for the said constants are for example $a_1$ = 11, $a_2$ = 31 and b = 10.

The estimated instantaneous value $T_{EQ}$ of the equivalent temperature and of the associated objective value $T_{REF}$ arrive at the inputs of a subtractor 46 at the output from which there is therefore a signal indicative of the difference or error E = $T_{REF}$ - $T_{EQ}$.

The control system 40 further includes a control and command unit indicated 47 in Figure 2 which pilots the actuator 18 of the mixer device 16 to control the duty cycle of the opening of the electrically controlled valve 21 associated with the heater 14 and further to control the speed and therefore the rate of flow of the fan 8-9.

The control unit 17 includes a first control block 48 which processes the law of variation of the flow rate Q of the electric fan 8-9 on the basis of the value of the temperature $T_e$ of the air outside the passenger compartment and the instantaneous error E between the reference temperature $T_{REF}$ and the equivalent temperature $T_{EQ}$.

For the purpose of obtaining an optimum comfort situation both from the point of view of the sensation of temperature and as far as noise is concerned, the block 48 performs a control strategy aimed at reducing to the minimum allowed value the rate of flow of air Q blown into the cab 1 through the outlet 12. This minimum value is conveniently predetermined as a function of the external temperature $T_e$, for example according to the law:

$Q_{MIN}$ = 10 $T_e$, for $T_e$ greater than 26°C
$Q_{MIN}$ = 260 $m^3$/h, for $T_e$ lying between 10°C and 26°C, and
$Q_{MIN}$ = 320 - 6 $T_e$, for $T_e$ less than 10°C

The block 48 can further be prearranged to limit the maximum value which the rate of flow Q of air can assume as a function of the value of the external air temperature $T_e$. For example, this maximum value can be limited to 510$m^3$/h when the temperature $T_e$ is less than 20°C (a situation definable as intermediate or winter season) and to 680$m^3$/h when $T_e$ is greater than 20°C (summer season).

The block 48 is prearranged to perform an input/output transfer function G(s) = $T_{EQ}$/Q (in which s is the complex variable) determinable, in a manner known per se, starting from a system of differential equations which define the thermal behaviour of the passenger compartment or cab 1 of the vehicle and on the basis of experimental determinations of the thermal parameters of the specific passenger compartment under consideration. The transfer function G(s) has in general zeros and poles which depend on the values of the thermal capacity and thermal conductance of the passenger compartment or cab. An acceptably precise characterisation is already possible with a transfer function G(s) of the first order and control effected is correspondingly of the proportional-integral type.

The output of the block 48 is connected to a controller 49 which controls the electric motor 9 associated with the fan 8.

The control unit 47 further includes two blocks 50 and 51 which by means of respective drivers or controllers 52 and 53 controls the mixer device 16/18 and, respectively, the electrically controlled valve 21 which is associated with the heater 14.

From tests performed on an air conditioning unit it has emerged that, to obtain at the output from the ventilation openings 12 air at a temperature greater than 13-15°C, in particular in so-called "average season" conditions, it is necessary to fix the position of the flap valve 17 of the mixer device 16. The control strategy of the position $\alpha$ of this

flap valve has been developed on the basis of this observation.

In the case of the flap valve it is also possible to derive a simplified first order transfer function $G_1$ (s) = $T_{EQ}$ /$\alpha$ and the control which regulates the behaviour of the mixer device is in this case also of proportional-integral type. In a preferred embodiment this control intervenes when the difference or error E between the objective/equivalent temperature $T_{REF}$ and the estimated equivalent temperature $T_{EQ}$ is greater than or equal, in absolute value, to a predetermined value, for example equal to 1°C. The control block 50 is prearranged so that, when the error E becomes less than the said value, the position of the flap valve 17 of the mixer device is locked.

As far as the control of the valve 21 is concerned, it has been found that depending on its duty cycle of opening the temperature of the air at the output from the heater 14 varies with a strongly non-linear law. It has also been established that a significant interaction exists between the degree of opening of the valve 21 and the position of the mixer flap valve 17. This dependence reflects on the temperature of the output air from the ventilation openings 12 as well as on the output air from the defroster passages 19, and the air directed towards the feet of the user through the duct 20 and, consequently, on the overall temperature sensation of the user.

For the purpose of rendering the temperature sensation within the cab 1 as uniform as possible the control block 51 is conveniently formed in such a way as to perform a control of the proportional-integral type when the error E mentioned above is greater than a predetermined value for example 1°C. The block 51 is however conveniently formed in such a way that upon exceeding this threshold the opening of the valve 21 is regulated by means of a simple contribution substantially proportional to the error E in such a way as not to induce excessively accentuated discontinuities in the temperature of the air output from the various openings.

Naturally, the principle of the invention remaining the same, the embodiments and details of construction can be widely varied with respect to those described and illustrated purely by way of non-limitative example, without by this departing from the ambit of the invention as defined in the annexed Claims.

## Claims

1. A control system for an air conditioning installation for the passenger compartment of a motor vehicle, in particular for the cab (1) of an industrial vehicle, said installation comprising

   an inlet duct (5) in which is disposed the evaporator (7) of a refrigeration unit, followed by a fan (8) driven by an electric motor (9) and operable to draw through the evaporator (7) air from the outside or from within the passenger compartment,
   at least one emission duct (11) connected to a plurality of ventilator outlets (12) located in the belt region of the passenger compartment,
   an air heater (14) disposed downstream of the inlet duct (5) in a chamber (13) capable of communicating with the said emission duct (11) and including a liquid/air heat exchanger (14) which receives a stream of coolant liquid from the vehicle engine through an electrically operated control valve (21),
   a mixer device (16) controlled by an associated electrically controlled actuator (18) and disposed between the output of the inlet duct (5) and the inlets of the emission duct (11) and the chamber (13) of the heater, and capable of assuming a first and a second position in which it couples the output of the fan (8) selectively with the emission duct (11) or with the said chamber (13) of the heater (14), and a plurality of intermediate positions in which it couples the output of the fan (8) with the said emission duct (11) and the said chamber (13) with respective variable air flow rates;
   the control system being **characterised in that** it comprises, in combination
   electric sensor means (30-34) operable to provide signals indicative of the air temperatures outside and inside the passenger compartment (1) as well as at the output of the evaporator (7) and of the heater (14), and signals indicative of the thermal power introduced into the passenger compartment (1) by the effect of solar radiation;
   manually operable setting means (35) usable by a user to generate signals indicative of the desired temperature ($T_d$) in the passenger compartment (1); and
   a processor and control unit (40) provided to control the motor (9) of the fan (8), the said electrically controlled valve (21), and the actuator (18) of the mixer device (16) in a predetermined manner as a function of the signals provided by the sensor means (30, 34) and the setting means (35); the said unit (40) comprising
   first processor means (41) arranged to calculate the instantaneous value of an equivalent temperature ($T_{EQ}$) according to the predetermined function of the temperature ($T_i$) of the air in the passenger compartment (1), the temperatures ($T_{EVA}$, $T_{AS}$) of the air at the output of the evaporator (7) and at the output of the heater (14), the position ($\alpha$) of the mixer device (16, 17) and the thermal power (I) introduced into the passenger compartment (1) by the effect of solar radiation;
   second processor means (42) arranged to calculate an instantaneous objective value ($T_{REF}$) for the said equivalent temperature according to a predetermined function of the temperature ($T_e$) of the air outside the passenger compartment (1) and the desired temperature ($T_d$) set by the user;

subtractor means (46) operable to provide electrical signals indicative of the error or difference (E) between the calculated instantaneous value of the equivalent temperature ($T_{EQ}$) and the corresponding objective value ($T_{REF}$); and

control means (47) arranged to

- control the motor (9) of the fan (8) in such a way that the air flow rate (Q) delivered by the fan (8) varies in dependence on the said error (E) according to a predetermined function, between a minimum value and a maximum value variable according to predetermined functions of the temperature ($T_e$) of the air outside the passenger compartment (1);
- control the position of the mixer device (16, 17) according to a predetermined function of the said error (E) as long as the absolute value of this error is greater than a predetermined value, and to fix the said mixer device (16) in a predetermined position when the absolute value of the said error (E) is less than the said predetermined value; and
- control the duty cycle of opening of the said electrically controlled valve (21) according to a proportional-integral function of the said error (E) as long as this latter has a value greater than the said predetermined value, and then according to a function essentially proportional to the said error (E) when this latter is less than the predetermined value.

2. A system according to Claim 1, in which the said first processor means (41) are arranged to calculate the value of the equivalent temperature ($T_{EQ}$) according to a function of the type

$$T_{EQ} = k_1 \cdot T_i + k_2 (1 - \alpha) \cdot T_{EVA} + k_3 \cdot \alpha \cdot T_{AS} + k_4 \cdot I \qquad (1)$$

in which $T_i$ is the temperature of the air within the passenger compartment, $T_{EVA}$ is the temperature at the output of the evaporator (7), $T_{AS}$ is the air temperature at the output of the heater (14), I is the surface density of the thermal power introduced into the passenger compartment (1) by the effect of solar radiation, $\alpha$ is the percentage of opening of the mixer device (16) and $k_1$-$k_4$ are experimentally determined constant coefficients.

3. A system according to Claim 2, in which the said second processor means (42) are arranged to calculate the said objective value ($T_{REF}$) for the equivalent temperature according to the function

$$T_{REF} = (-a_1 \cdot I_{CLO} + a_2) + (1 - I_{MET}) \cdot b \qquad (2)$$

in which $a_1$, $a_2$ and b are constant coefficients and $I_{CLO}$ and $I_{MET}$ are indices calculated according to predetermined functions of the temperature ($T_e$) of the air outside the passenger compartment (1) and the desired temperature ($T_d$) set by the user respectively.

4. A system according to Claim 3, in which the index $I_{CLO}$ is calculated according to a decreasing function of the temperature ($T_e$) of the air outside the passenger compartment (1), and the index $I_{MET}$ is calculated according to a continuously decreasing function of the desired temperature ($T_d$) set by the user.

5. A system according to Claim 4, in which the index ($I_{CLO}$) is calculated according to a step function of the temperature ($T_e$) of the air outside the passenger compartment (1).

**Patentansprüche**

1. Regelsystem für eine Klimaanlage für den Fahrgastraum eines Kraftfahrzeuges, insbesondere für das Fahrerhaus (1) eines Nutzfahrzeuges, wobei genannte Anlage umfasst

einen Einlaßkanal (5), in welchem der Verdampfer (7) einer Kühleinheit angeordnet ist, gefolgt von einem Gebläse (8), welches von einem Elektromotor (9) angetrieben wird und betrieben werden kann, um Luft durch den Verdampfer (7) hindurch von außen oder vom Fahrgastraum anzusaugen,

zumindest einen Auslaßkanal (11), welcher mit einer Vielzahl von Ventilatorauslaßöffnungen (12) verbunden ist, welche in der Gurtgegend des Fahrgastraumes angebracht sind,

einen Lufterhitzer (14), welcher stromabwärts zu Einlaßkanal (5) in einer Kammer (13) angebracht ist, welche mit dem genannten Auslaßkanal (11) verbunden ist, und einen Flüssigkeit/Luft-Wärmetauscher (14) umfasst, welcher einen Kühlflüssigkeitsstrom vom Fahrzeugmotor durch ein elektrisch betriebenes Steuerventil (21) hindurch erhält,

eine Mischeinheit (16), welche durch ein hinzugefügtes, elektrisch betätigtes Stellglied (18) gesteuert wird und zwischen dem Ausgang des Einlaßkanals (5) und den Einlaßöffnungen des Auslaßkanals (11) und der Kammer (13) des Erhitzers angebracht ist, und fähig ist, eine erste und eine zweite Position einzunehmen, bei welchen sie den Ausgang des Gebläses (8) selektiv mit dem Auslaßkanal (11) oder mit der genannten Kammer (13) des Erhitzers (14) verbindet, und eine Vielzahl von Zwischenpositionen, bei welchen sie den Ausgang des Gebläses (8) mit dem genannten Auslaßkanal (11) und der genannten Kammer (13) mit entsprechend variablen Luftstromanteilen verbindet;

Regelsystem, **dadurch gekennzeichnet, daß** es umfasst, in Kombination

elektrische Sensorhilfsmittel (30-34), die betrieben werden können, um Signale zu erzeugen, welche die Lufttemperaturen außerhalb und innerhalb des Fahrgastraumes (1) sowie am Ausgang des Verdampfers (7) und des Erhitzers (14) anzeigen, und Signale, welche die thermische Energie anzeigen, welche in den Fahrgastraum (1) durch die Wirkung der Sonnenstrahlung eingeleitet wird;

ein manuell bedienbares Einstellhilfsmittel (35), welches von einem Nutzer verwendet werden kann, um Signale zu erzeugen, welche die gewünschte Temperatur ($T_d$) im Fahrgastraum (1) anzeigen; und

eine Prozessor- und Regeleinheit (40), welche vorgesehen ist, um den Motor (9) des Gebläses (8), das genannte elektrisch gesteuerte Ventil (21) und das Stellglied (18) der Mischeinheit (16) in einer vorherbestimmten Art und Weise als eine Funktion der Signale zu regeln, welche durch die Sensorhilfsmittel (30, 34) und das Einstellhilfsmittel (35) erzeugt werden; wobei die genannte Einheit (40) umfasst

ein erstes Prozessorhilfsmittel (41), welches angeordnet ist, um den aktuellen Wert einer äquivalenten Temperatur ($T_{EQ}$) gemäß der vorherbestimmten Funktion der Temperatur ($T_i$) der Luft im Fahrgastraum (1), der Temperaturen ($T_{EVA}$, $T_{AS}$) der Luft am Ausgang des Verdampfers (7) und am Ausgang des Erhitzers (14), die Position ($\alpha$) der Mischeinheit (16, 17) und die thermische Energie (I), welche in den Fahrgastraum (1) durch die Wirkung der Sonnenstrahlung eingeleitet wird, zu berechnen;

ein zweites Prozessorhilfsmittel (42), welches angeordnet ist, um einen aktuellen Zielwert ($T_{REF}$) für die genannte äquivalente Temperatur gemäß einer vorherbestimmten Funktion der Temperatur ($T_e$) der Luft außerhalb des Fahrgastraumes (1) und der gewünschten Temperatur ($T_d$), welche vom Nutzer eingestellt ist, zu berechnen;

ein Subtrahiererhilfsmittel (46), welches betrieben werden kann, um elektrische Signale zu erzeugen, welche den Fehler oder die Differenz (E) zwischen dem berechneten aktuellen Wert der äquivalenten Temperatur ($T_{EQ}$) und dem entsprechenden Zielwert ($T_{REF}$) anzeigen; und

ein Regelhilfsmittel (47), welches angeordnet ist,

- um den Motor (9) des Gebläses (8) auf solche Weise zu regeln, daß der Luftstromanteil (Q), welcher durch das Gebläse (8) gefördert wird, variiert in Abhängigkeit von dem genannten Fehler (E) gemäß einer vorherbestimmten Funktion zwischen einem Mindestwert und einem Höchstwert, variabel gemäß vorherbestimmten Funktionen der Temperatur ($T_e$) der Luft außerhalb des Fahrgastraumes (1);

- um die Position der Mischeinheit (16, 17) gemäß einer vorherbestimmten Funktion des genannten Fehlers (E) solange zu regeln, wie der absolute Wert dieses Fehlers größer als ein vorherbestimmter Wert ist, und um die genannte Mischeinheit (16) in einer vorherbestimmten Position zu fixieren, wenn der absolute Wert des genannten Fehlers (E) kleiner ist als der genannte vorherbestimmte Wert; und

- um den Arbeitszyklus des Öffnens des genannten elektrisch gesteuerten Ventils (21) gemäß einer Proportional-Integral-Funktion des genannten Fehlers (E) solange zu regeln, wie letzterer einen Wert größer als der genannte vorherbestimmte Wert aufweist, und dann gemäß einer Funktion im Wesentlichen proportional zu dem genannten Fehler (E), wenn letzterer kleiner ist als der vorherbestimmte Wert.

2. System gemäß Anspruch 1, bei welchem das genannte erste Prozessorhilfsmittel (41) angeordnet ist, um den Wert der äquivalenten Temperatur ($T_{EQ}$) gemäß einer Funktion des Typs

$$T_{EQ} = k_1 \cdot T_i + k_2 (1 - \alpha) \cdot T_{EVA} + k_3 \cdot \alpha \cdot T_{AS} + k_4 \cdot I \tag{1}$$

zu berechnen, bei welcher $T_i$ die Temperatur der Luft innerhalb des Fahrgastraumes ist, $T_{EVA}$ die Temperatur am Ausgang des Verdampfers (7) ist, $T_{AS}$ die Lufttemperatur am Ausgang des Erhitzers (14) ist, I die Oberflächendichte der thermischen Energie ist, welche durch die Wirkung der Sonnenstrahlung in den Fahrgastraum (1) eingeleitet wird, $\alpha$ der Prozentsatz der Öffnung der Mischeinheit (16) ist und $k_1$-$k_4$ experimentell bestimmte konstante Koeffizienten sind.

3. System gemäß Anspruch 2, bei welchem das genannte zweite Prozessorhilfsmittel (42) angeordnet ist, um den genannten Zielwert ($T_{REF}$) für die äquivalente Temperatur gemäß der Funktion

$$T_{REF} = (-a_1 \cdot I_{CLO} + a_2) + (1 - I_{MET}) \cdot b \qquad (2)$$

zu berechnen, bei welcher $a_1$, $a_2$ und b konstante Koeffizienten sind und $I_{CLO}$ und $I_{MET}$ Indizes sind, welche gemäß vorherbestimmten Funktionen der Temperatur ($T_e$) der Luft außerhalb des Fahrgastraumes (1) und der gewünschten Temperatur ($T_d$) berechnet werden, welche entsprechend durch den Nutzer eingestellt wird.

4. System gemäß Anspruch 3, bei welchem der Index $I_{CLO}$ gemäß einer abnehmenden Funktion der Temperatur ($T_e$) der Luft außerhalb des Fahrgastraumes (1) berechnet wird, und der Index $I_{MET}$ gemäß einer kontinuierlich abnehmenden Funktion der gewünschten Temperatur ($T_d$) berechnet wird, welche durch den Nutzer eingestellt wird.

5. System gemäß Anspruch 4, bei welchem der Index ($I_{CLO}$) gemäß einer Stufenfunktion der Temperatur ($T_e$) der Luft außerhalb des Fahrgastraumes (1) berechnet wird.

**Revendications**

1. Système de commande pour une installation de climatisation de l'habitacle d'un véhicule moteur, en particulier pour la cabine (1) d'un véhicule industriel, ladite installation comprenant

un conduit d'entrée (5) dans lequel est disposé l'évaporateur (7) d'une unité de réfrigération, suivi d'un ventilateur (8) entraîné par un moteur électrique (9) et actionnable pour aspirer à travers l'évaporateur (7) l'air de l'extérieur ou de l'intérieur de l'habitacle,

au moins un conduit d'émission (11) relié à plusieurs sorties de ventilateur (12) situées dans la région des ceintures du compartiment passager,

un dispositif de chauffage d'air (14) disposé en aval du conduit d'admission (5) dans une chambre (13) apte à communiquer avec ledit conduit d'émission (11) et incluant un échangeur de chaleur de liquide/air (14) qui reçoit un flux de liquide de refroidissement du moteur du véhicule à travers une vanne de commande (21) à commande électrique,

un dispositif de mélange (16) commandé par un actionneur associé (18) commandé électriquement et disposé entre la sortie du conduit d'admission (5) et les entrées du conduit d'émission (11) et de la chambre (13) du dispositif de chauffage, et apte à occuper une première et une seconde position dans laquelle il couple la sortie du ventilateur (8) sélectivement avec le conduit d'émission (11) ou avec ladite chambre (13) du dispositif de chauffage (14), et plusieurs positions intermédiaires dans lesquelles il couple la sortie du ventilateur (8) avec ledit conduit d'émission (11) et ladite chambre (13) avec des débits d'écoulement d'air variables respectifs ;

le système de commande étant **caractérisé en ce qu'**il comprend, en combinaison

des moyens formant capteur électrique (30-34) aptes à fournir des signaux indiquant les températures de l'air à l'extérieur et à l'intérieur de l'habitacle (1) ainsi que la sortie de l'évaporateur (7) et du dispositif de chauffage (14), et des signaux indiquant la puissance thermique introduite dans l'habitacle (1) sous l'effet du rayonnement solaire ;

des moyens de réglage actionnables manuellement (35) utilisables par un utilisateur pour produire des signaux indiquant la température recherchée ($T_d$) dans l'habitacle (1) ; et

une unité de traitement et de commande (40) prévue pour commander le moteur (5) du ventilateur (8), ladite vanne à commande électrique (21) et l'actionneur (18) du dispositif de mélange (16) d'une manière prédéterminée en fonction des signaux fournis par les moyens formant capteur (30, 34) et les moyens de réglage (35) ; l'unité précitée (40) comprenant

un premier moyen de traitement (41) agencé pour calculer la valeur instantanée d'une température équivalente ($T_{EQ}$) selon la fonction prédéterminée de la température ($T_i$) de l'air dans l'habitacle (1), les températures ($T_{EVA}$, $T_{AS}$) de l'air à la sortie de l'évaporateur (7) et à la sortie du dispositif de chauffage (14), la position ($\alpha$) du

dispositif de mélange (16, 17) et la puissance thermique (I) introduite dans l'habitacle (1) sous l'effet du rayonnement solaire ;

un deuxième moyen de traitement (42) agencé pour calculer une valeur objective instantanée ($T_{REF}$) pour ladite température équivalente en accord avec une fonction prédéterminée de la température ($T_E$) de l'air à l'extérieur de l'habitacle (1) et de la température recherchée ($T_d$) réglée par l'utilisateur ;

un moyen de soustraction (46) actionnable pour fournir des signaux électriques indiquant l'erreur ou la différence (E) entre la valeur instantanée calculée de la température équivalente ($T_{EQ}$) et la valeur objective correspondante ($T_{REF}$) ; et

un moyen de commande (47) agencé pour

- commander le moteur (9) du ventilateur (8) de telle manière que le débit d'écoulement d'air (Q) produit par le ventilateur (8) varie en fonction de ladite erreur (E) en accord avec une fonction prédéterminée, entre une valeur minimale et une valeur maximale variable en accord avec des . fonctions prédéterminées de la température ($T_e$) de l'air à l'extérieur de l'habitacle (1) ;

- régler la position du dispositif de mélange (16, 17) en accord avec une fonction prédéterminée de ladite erreur (E) aussi longtemps que la valeur absolue de cette erreur est plus grande qu'une valeur prédéterminée, et fixer ledit dispositif de mélange (16) dans une position prédéterminée lorsque la valeur absolue de ladite erreur (E) est inférieure à ladite valeur prédéterminée ; et

- régler le mode de service de l'ouverture de ladite vanne à commande électrique (21) en accord avec une fonction proportionnelle-intégrale de ladite erreur (E) aussi longtemps que cette dernière présente une valeur plus grande que ladite valeur prédéterminée, et ensuite en accord avec une fonction essentiellement proportionnelle à ladite erreur (E) lorsque cette dernière est inférieure à la valeur prédéterminée.

2. Système selon la revendication 1, où lesdits premiers moyens de traitement (41) sont agencés pour calculer la valeur de la température équivalente ($T_{EQ}$) en accord avec une fonction du type

$$T_{EQ} = k_1 \cdot T_i + k_2 (1-\alpha) \cdot T_{EVA} + k_3 \cdot \alpha \cdot T_{AS} + k_4 \cdot I \tag{1}$$

où $T_i$ représente la température de l'air dans l'habitacle, $T_{EVA}$ représente la température à la sortie de l'évaporateur (7), $T_{AS}$ représente la température de l'air à la sortie du dispositif de chauffage (14), I représente la densité surfacique de la puissance thermique introduite dans l'habitacle (1) sous l'effet du rayonnement solaire, $\alpha$ représente le pourcentage de l'ouverture du dispositif de mélange (16) et $k_1$-$k_4$ sont des coefficients constants déterminés par des essais.

3. Système selon la revendication 2, où lesdits seconds moyens de traitement (42) sont agencés pour calculer ladite valeur objective ($T_{REF}$) pour la température équivalente en accord avec la fonction

$$T_{REF} = (-a_1 \cdot I_{CLO} + a_2) + (1 \text{ ※ } I_{MET}) \cdot b \tag{2}$$

où $a_1$, $a_2$ et b sont des coefficients constants et $I_{CLO}$ et $I_{MET}$ sont des indices calculés en accord avec des fonctions prédéterminées de la température ($T_e$) de l'air à l'extérieur de l'habitacle (1) et de la température souhaitée ($T_d$) réglée par l'utilisateur, respectivement.

4. Système selon la revendication 3, où l'indice $I_{CLO}$ est calculé en accord avec une fonction décroissante de la température ($T_e$) de l'air à l'extérieur de l'habitacle (1), et l'indice $I_{MET}$ est calculé en accord avec une fonction continuellement décroissante de la température souhaitée ($T_d$) réglée par l'utilisateur.

5. Système selon la revendication 4, où l'indice ($I_{CLO}$) est calculé en accord avec une fonction échelon de la température ($T_e$) de l'air à l'extérieur de l'habitacle (1).

# FIG. 1

FIG. 2